# EUROPEAN PATENT APPLICATION

(11) **EP 4 775 708 A1**
(43) Date of publication of application: **15.07.2026**
(21) Application number: 26151349.3
(22) Date of filing: 12.01.2026
(51) Int. Cl.: C23C 8/02, C23C 8/10, C23C 8/12, C23C 8/80, C23C 26/00, C23C 26/02, B23K 26/08, F16J 9/26

(54) **SEAL RING LASER OXIDE COATING**

(30) Priority: 13.01.2025 US 202563744554 P
(71) Applicant: RTX Corporation, Farmington, CT 06032 (US)
(72) Inventor: THAYER, Henry H., Wethersfield, CT 06109 (US); MOHSENI, Hamidreza, Avon, CT 06001 (US)
(74) Representative: Dehns

(57) **Abstract**

A method for oxide formation on the surface of a ring includes: mounting a ring in a fixture (312); driving rotation of the ring about a first axis (314); contacting an outer diameter surface of the ring with a roller (340); and laser heating the outer diameter surface of the ring to form an oxide layer. The rotation causes compaction of the oxide by the roller (340).

## Description

### BACKGROUND

The disclosure relates to gas turbine engines. More particularly, the disclosure relates to piston seal rings (PSR).

Gas turbine engines (used in propulsion and power applications and broadly inclusive of turbojets, turboprops, turbofans, turboshafts, industrial gas turbines, and the like) use PSR in several situations.

A PSR seals between an inner member and an outer member. The inner member and outer member may be static structure such as case components. Or, the inner member and the outer member may be rotating structure such as components of a spool or rotor. The inner member and the outer member may be subject to small excursions relative to each other. For example, torque loads may cause small rotational movements; thrust loads or differential thermal expansion may cause small axial movements. Vibration may also cause small rotational, radial, or axial movements. Such small or transient rotational movements, however, are distinguished from continuous relative rotational movement such as in face seal or shaft seal between two relatively rotating components (e.g., two different spools or a spool and a static structure).

The PSR is accommodated in an outer diameter groove in the inner member. Under dynamic and/or pressure loading, the PSR seals against a sidewall of the groove and an inner diameter surface of the outer member. In one example of such a situation involving a rotor, the inner member is a shaft and the outer member is a rotor stack of the associated spool. In a more particular example, the outer member is a seal runner protruding axially from a protuberant bore of a disk of the rotor stack. Tension in the shaft holds the rotor stack in precompression. Small rotational, axial, and/or radial displacements of the shaft and seal runner may be caused by factors including transients and changes in operational conditions such as torque and thrust loads (which will vary between one steady state condition and another steady state condition). In such an example, the PSR is accommodated in an outer diameter (OD) groove in the shaft.

PSRs are often small in cross-section so as to be relatively compliant compared to the contacting structure (e.g., members forming the groove and runner). The ring is split for assembly purposes and/or to allow radial expansion under centrifugal loading. The ring circumferential ends may form an overlapping joint (e.g., a shiplap joint). The small cross section and split provide the ring with little hoop strength and twist resistance. For example, with a nickel alloy shaft and nickel alloy runner, ring material may be nickel or cobalt alloy and may have generally similar material hardness (at least of a substrate if coated). Example coatings are one or more sprayed or brushed solid lubricant layers directly atop the substrate outer diameter surface and extending onto the substrate axial end surfaces.

One group of examples of PSR substrates involves cobalt-based chromium-tungsten alloys. An example alloy is AMS5894/Cobalt Alloy 6B/UNS R30016. The PSR substrate may have a coating as discussed above.

In an example manufacture process, the substrate may be formed from forged rod stock. Ring precursors are cut/machined from the rod (e.g., on a cutting lathe or the like) to an annulus with the PSR nominal cross-sectional shape. The resulting precursor may be grit blasted, particularly on the outer diameter (OD) surface to clean and roughen in preparation for coating application. Then, the annulus may be cut (e.g., by CNC mill, wire EDM, water jet or other tool) to form a shiplap or similar joint (to allow PSR expansion/contraction). Then, the coating, if any, may be applied as discussed above.

In other known processes for other articles, laser cleaning of an article is performed prior to coating application. This removes oil and other organics. An air flow serves to cool and evacuate volatilized contaminants. One particular example is cleaning an MCrAlY bondcoat prior to ceramic thermal barrier coating application. An example of this is found in US Patent Application Publication 2022/0298645A1, Thayer et al., published September 22, 2022, and entitled "Laser Induced, Fine Grained, Gamma Phase Surface for NiCoCrAlY Coating Prior to Ceramic Coat".

Smolina et al. describe laser remelt and laser clad coatings for Stellite^{®} 6 Co-Cr alloy of Kennametal Inc., Latrobe PA. Smolina, Irina & Kobiela, Karol, "Characterization of Wear and Corrosion Resistance of Stellite 6 Laser Surfaced Alloyed (LSA) with Rhenium", Coatings, 3 March 2021, Vol. 11 (292), MDPI, Basel, Switzerland. There are several related Stellite^{®} family alloys. One such alloy is generically known as Cobalt Alloy 6b (wrought specification AMS 5894 - UNS R30016). Wrought microstructure is characterized by evenly distributed isolated (rather than interconnected) carbides. Interconnected carbides of cast microstructure contribute to brittleness. Wrought microstructure generally offers enhanced strength and wear resistance.

International Application PCT/US24/20351 (the '351 application) of RTX Corporation, filed March 18, 2024, published September 26, 2024 as WO2024/196834A1 (the '834 publication), and entitled "Laser Treatment of Piston Seal Rings" discloses laser oxidation coating of the outer diameter (OD) surface of piston seal rings. Separately, laser-induced oxidation is generally discussed in Nánai et al., "Laser-induced oxidation of metals: state of the art", Thin Solid Films, 20 April 1997, pp. 160-164, Volume 298, Issues 1-2, Elsevier Science S.A., Lausanne, Switzerland.

### SUMMARY

One aspect of the disclosure involves a method for oxide formation on the surface of a ring, the method comprising: mounting a ring in a fixture; driving rotation of the ring about a first axis; contacting an outer diameter surface of the ring with a roller; and laser heating the outer diameter surface of the ring to form an oxide layer. The rotation causes compaction of the oxide by the roller.

In a further example of any of the foregoing, additionally and/or alternatively, the compaction embeds oxide in a substrate of the ring.

In a further example of any of the foregoing, additionally and/or alternatively, the ring is a split ring.

In a further example of any of the foregoing, additionally and/or alternatively, the laser heating comprises axial movement of a laser spot on the outer diameter surface of the ring.

In a further example of any of the foregoing, additionally and/or alternatively, the laser heating comprises alternating scans in opposite directions.

In a further example of any of the foregoing, additionally and/or alternatively, the laser heating involves multiple illuminations of each point on the outer diameter surface of the ring to progressively build up the oxide.

A further example of any of the foregoing may additionally and/or alternatively include cooling the roller.

In a further example of any of the foregoing, additionally and/or alternatively: the seal has a substrate representing a by-weight majority of the seal and having Co as a largest by-weight constituent element and at least 18.0 weight percent Cr; and the oxide coating comprises Cr₂O₃ and Cr₂CoO₄.

In a further example of any of the foregoing, additionally and/or alternatively, the seal substrate has no more than 20.0 weight percent any element other than Co, Cr, and Ni.

In a further example of any of the foregoing, additionally and/or alternatively, the substrate has Cr as a second largest by-weight constituent element.

In a further example of any of the foregoing, additionally and/or alternatively, the substrate has no more than 20.0 weight percent any element other than Co and Cr.

In a further example of any of the foregoing, additionally and/or alternatively the substrate comprises by weight percent: ≤2.0 C; ≤2.5 Mn; ≤2.5 Si; ≤0.1 P; ≤0.1 S; 18.0-35.0Cr; ≤30.0 Ni; ≤8.0 max Mo; ≤16.0 W; ≤4.0 Fe; and balance Co and no more than 7.0 each other element, if any, individually and 15.0 all other elements total.

In a further example of any of the foregoing, additionally and/or alternatively, the substrate comprises by weight percent: 0.90-1.90 C; 0.50-2.00 Mn; 0.20-2.00 Si; 0.04 max P; 0.03 max S; 28.00-32.00 Cr; 3.00 max Ni; 1.50 max Mo; 3.50-5.50 W; 3.0 max Fe; and balance Co and no more than 1.0 each other element, if any, individually and 5.0 all other elements total.

In a further example of any of the foregoing, additionally and/or alternatively, the substrate comprises by weight percent: 0.90-1.40 C; 0.50-2.00 Mn; 0.20-2.00 Si; 0.04 max P; 0.03 max S; 28.00-32.00 Cr; 3.00 max Ni; 1.50 max Mo; 3.50-5.50 W; 3.0 max Fe; and balance Co and no more than 1.0 each other element, if any, individually and 5.0 all other elements total.

In a further example of any of the foregoing, additionally and/or alternatively, among said other elements, Cu, Ag, Pb, N, As, Sb, Bi, O, Se, Te, He, and Ar may each be ≤0.1 weight percent or at lower impurity levels and/or Mg, Ca, Y, Ce, La, Zr and B ≤1.0 weight percent and Zr ≤2.0 weight percent.

In a further example of any of the foregoing, additionally and/or alternatively, the oxide layer has a thickness (T) of at least 50 nanometers.

A further aspect of the disclosure involves said method performed with a system comprising: said roller; said fixture; a motor coupled to the fixture for said driving; a laser for generating a laser beam for said laser heating; a first actuator for axially moving a laser spot from the laser on the outer diameter surface of the ring; and a second actuator for controlling a contact force between the roller and the outer diameter surface of the ring.

A further example of any of the foregoing may additionally and/or alternatively include: via the first actuator, axially moving the laser spot for said laser heating; and via the second actuator controlling the contact force between the roller and the outer diameter surface of the ring.

In a further example of any of the foregoing, additionally and/or alternatively, the laser is pulsed and the laser heating comprises alternating scans in opposite directions with partial overlap of pulse spots within the scans and partial overlap of pulse spots from scan-to-scan.

A further aspect of the disclosure involves a seal laser treated to form oxides by said method.

A further example of any of the foregoing may additionally and/or alternatively include a substrate representing a by-weight majority of the seal and having Co as a largest by-weight constituent element and at least 18.0 weight percent Cr.

In a further example of any of the foregoing, additionally and/or alternatively, the oxide coating comprises Cr₂O₃ and Cr₂CoO₄.

A further aspect of the disclosure involves a system for oxide formation on a seal ring, the system comprising: a fixture for holding the seal ring; a motor for driving rotation of the fixture about a first axis; a roller positioned or positionable to contact an outer diameter surface of the seal ring; and a laser positioned or positionable to direct a beam to heat the outer diameter surface of the seal ring.

A further example of any of the foregoing may additionally and/or alternatively include: an actuator for applying a controllable compressive force between the roller and the seal ring; and a second actuator for shifting the laser beam axially across the seal ring.

In a further example of any of the foregoing, additionally and/or alternatively, the fixture comprises: a mandrel section for supporting an inner diameter (ID) surface of the seal; and first and second flanges for engaging respective first and second axial end faces of the seal.

In a further example of any of the foregoing, additionally and/or alternatively, the mandrel section and the first and second flanges are ceramic.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a schematic side view of a system for laser oxide formation on a piston seal ring (PSR).
FIG. 2 is a transverse view of roller-to-PSR engagement in the system of FIG. 1.

Like reference numbers and designations in the various drawings indicate like elements.

### DETAILED DESCRIPTION

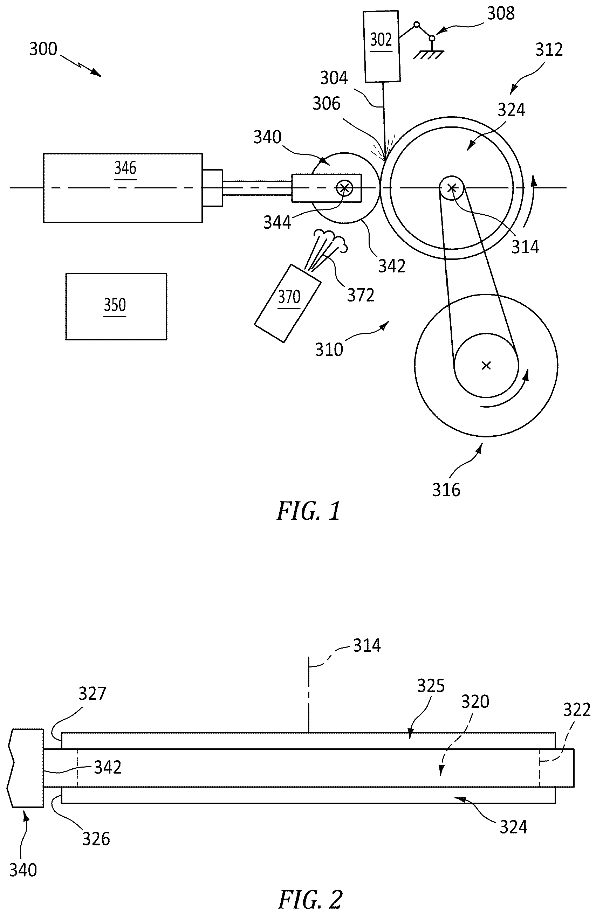

FIG. 1 shows an apparatus/system 300 for laser treatment for oxide formation and embedding on the outer diameter (OD) surface/face of a piston seal ring (PSR) substrate or precursor substrate thereof. Thus, in some examples, the substrate is initially pre-formed into the split ring form of a PSR including a joint such as a shiplap joint. In other examples, there may be cutting or other machining operations after the laser coating. One post-laser treatment example involves forming segmented PSRs wherein additional joint cuts are made posttreatment. Thus, in one example of a four-segment PSR, one of four joints may initially be pre-treatment cut in the precursor substrate and the remaining three may be cut posttreatment. Other examples may include profile machining such as of the axial end faces and inner diameter (ID) face.

Other details of the PSR including substrate material and oxide may be as in the '351 application and '834 publication. Thus, example cobalt-based substrates include the identified Stellite^{®} alloys such as Stellite^{®} 6 and may have cobalt as a largest by-weight constituent element and substantial chromium (e.g., at least 18.0 weight percent). The oxide may thus comprise Cr₂O₃ and Cr₂CoO₄. Particular example alloys have Cr as a second largest by-weight constituent element. Particular example alloys have no more than 20.0 weight percent any element other than Co, Cr, and Ni. Particular example alloys have no more than 20.0 weight percent any element other than Co and Cr.

Particular example alloys comprise by weight percent: ≤2.0 C; ≤2.5 Mn; ≤2.5 Si; ≤0.1 P; ≤0.1 S; 18.0-35.0Cr; ≤30.0 Ni; ≤8.0 max Mo; ≤16.0 W; ≤4.0 Fe; and balance Co and no more than 7.0 each other element, if any, individually and 15.0 all other elements total.

Particular example alloys comprise by weight percent: 0.90-1.90 C; 0.50-2.00 Mn; 0.20-2.00 Si; 0.04 max P; 0.03 max S; 28.00-32.00 Cr; 3.00 max Ni; 1.50 max Mo; 3.50-5.50 W; 3.0 max Fe; and balance Co and no more than 1.0 each other element, if any, individually and 5.0 all other elements total.

Particular example alloys comprise by weight percent: 0.90-1.40 C; 0.50-2.00 Mn; 0.20-2.00 Si; 0.04 max P; 0.03 max S; 28.00-32.00 Cr; 3.00 max Ni; 1.50 max Mo; 3.50-5.50 W; 3.0 max Fe; and balance Co and no more than 1.0 each other element, if any, individually and 5.0 all other elements total.

In particular example alloys among said other elements, Cu, Ag, Pb, N, As, Sb, Bi, O, Se, Te, He, and Ar may each be ≤0.1 weight percent or at lower impurity levels and/or Mg, Ca, Y, Ce, La, Zr and B ≤1.0 weight percent and Zr ≤2.0 weight percent.

The system includes a laser unit 302 positioned or positionable to direct its beam 304 to cast a spot 306 on the OD surface of the substrate. Depending on the nature of the particular laser unit, beam movement may be internally controlled or may be controlled by an external actuator 308 (e.g., a robot, linear motor carriage, or the like) to scan the beam axially across the OD face.

The substrate is held in a rotary fixture system 310 which may include a fixture 312 mounted for rotation about an axis 314 and a motor 316 (e.g., electric motor) for driving rotation of the fixture about the axis. The example fixture 312 may have a mandrel section 320 with an outer diameter (OD) face 322 dimensioned to engage the substrate ID face and a pair of flanges 324, 325 for axially clamping the substrate across its axial end faces. Thus, at least one of the flanges may be removable from the mandrel section. In alternative examples, the fixture may be more of a permanent/fixed annular channel structure and the substrate is assembled thereto via expanding the split. In the example, the flanges have outer diameter (OD) surfaces 326, 327 (FIG. 2) at smaller radius than the PSR OD face so that the PSR protrudes radially beyond the flange OD faces.

The system further includes a roller 340 positioned or positionable so that its outer diameter (OD) surface 342 engages the PSR OD surface during laser treatment. Thus, initially the roller OD surface may contact the substrate but, as oxide builds up will compact the oxide into against remaining intact/unoxidized substrate. The roller is mounted for rotation about a roller axis 344. The example rotation is undriven and relatively free such as via mounting the roller on bearings. The roller axis, however, is shiftable toward and away from the fixture axis at least along a small range of motion so as to allow the application of a compressive force between the roller OD face and PSR OD face. This may effectively radially compress the PSR between the mandrel OD face and the roller OD face. To control such compressive force, the roller may be mounted for such movement such as by an actuator 346 such as pneumatic actuator. The compressive force may be measured by a strain gauge or pressure transducer integrated with the actuator. The force will be regulated by adjusting the air pressure to the air cylinder or other pneumatic actuator. Typical shop air systems that operate in the 0.60 MPa to 0.70 MPa range will be able to generate sufficient force. Example contact pressures are about 37 MPa, more broadly, 20 MPa to 100 MPa or 5 MPa to 120 MPa.

The various system sensors and controllable components such as actuators and motors and the laser may be controlled automatically via a controller 350 such as a microcontroller, microcomputer, or the like with appropriate hardwired and/or software instructions for performing the methods described.

In operation, the user may mount the substrate to the fixture (e.g., sliding the substrate over the mandrel and clamping the removeable flange thereto). The user may then bring the roller OD face 342 into contact with the substrate OD face. This may be an initial manual movement or may be controlled via the controller. The user may then command the controller to initiate operation which will include driving rotation of the fixture in a direction about its axis and applying appropriate force between the roller and the substrate OD surface via the actuator. Friction between the substrate OD surface and the roller OD surface 342 will rotate the roller with the substrate. The controller may then initiate operation of the laser directing the beam at the substrate OD surface.

In the illustrated example, the laser illuminates the substrate OD surface just ahead of the roller so that the illuminated area promptly passes into the engagement between the roller and substrate. Due to the presence of oxygen (e.g., in ambient air or in an oxygen-enriched environment) laser illumination heats the substrate surface and induces oxidation. Oxide can form several molecules deep because the oxygen can be passed from the surface oxides to the unoxidized metal below, especially when there is a plentiful supply of oxygen above the oxide layer. The oxidized substrate passes into contact with the roller wherein the engagement force between the roller and substrate compacts the oxide and drives it into the surface of the substrate. Eventually, the oxide passes around and is compacted again. The rolling friction breaks the oxide layer and forces it into the unoxidized metal substrate. This action both embeds the oxide in the surface so that it adheres better and exposes fresh metal that can be oxidized when heated by the laser. Repeated cycles of heating and rolling will create an oxide layer that is sufficiently thick, and sufficiently bonded, to survive under engine run conditions.

The laser movement may be controlled to induce oxidation of the entire surface. There are numerous variations and possible paths of the laser. In one example, the laser is moved progressively axially (relative to the axis of the fixture) at a relatively high rate compared with the continuous rotation rate of the fixture to traverse the laser spot close to axially (e.g., subject to a very small helix angle). The beam may be pulsed to create a close to axial (e.g., pure axial in the laboratory/factory frame of reference bus slightly helical or off axial in the PSR frame of reference) scan line or raster. An example pulse-to-pulse spot-to-spot overlap is about 50%, more broadly, 20% to 80%.

The rastering may pass axially beyond the PSR so that the subsequent opposite pass has partial overlap of spots. Due to the rotation, the amount of partial overlap of a given pass with the prior pass may progressively decrease. During a stage of the scan passing axially beyond the PSR, the beam may optionally not be pulsed. Also, a similar result may be achieved by simply pausing the scan with the beam off once it reaches the axial end. Thus, for example, with a slight pause the initial scan-to-scan or pass-to-pass overlap might be an example 90% but then diminishing to an example value of 10% at the end of the pass. The higher the scan rate relative to the rotation rate, the less difference between overlaps at the beginning and end of a scan/pass.

In some examples, there may be up to full overlap at the beginning and/or may even be non-overlap at the end. Overall, there will be many full rotations of the fixture and PSR so that the oxidation will even out (as long as the scan rate and the rotation rate are not synchronized so that for each revolution the scans fall at the same locations). An example number of revolutions may be at least 5, more particularly, 20 to 100 or 5 to 500. Alternative ranges may be formed by pairing any of the lower limits with any of the upper limits. An example number of scans may be such that each location on the PSR OD surface has been hit by at least 12 spots, more particularly, 20 to 400 or 100 to 500 or 20 to 2,000 or 12 to 10,000. Alternative ranges may be formed by pairing any of the lower limits with any of the upper limits.

For example, a 1.5 mm diameter laser spot pulsing at 10 kHz, would axially raster at 7500 mm/s to provide the 50% spot-to-spot overlap along the scan line. Rotational speed of the ring will need to be calculated based on the raster speed and, as well as the circumference of the ring.

It may be possible to rotate the fixture very rapidly and progress slowly in the axial direction, so that the oxide forms nearly circumferentially helically. However, it would be difficult to control, it would create the oxides unevenly, and would be more likely to induce thermal stresses in the PSR. Rapid axial rastering may thus be preferred with no full helix being formed.

Regarding temperature, if cooling is desired, one or more additional cooling sources may be provided. One example of a cooling source is an external air source 370 directing air 372 (e.g., shop air) at the roller and/or ring. In the illustrated example, the positioning is to direct an airflow at the roller exiting of the contact area.

Example roller 340 material is a nickel-based alloy such as IN-718 or a stainless steel. This may offer sufficient rigidity to compact the oxide as discussed above.

In one group of examples, the mandrel is similarly formed of a nickel-based alloy or a stainless steel. However, in others, the mandrel may be made of a ceramic such as alumina. This ceramic has the advantage of lower thermal conductivity than metal so less heat will be lost from the PSR to the fixture thus helping maintain elevated PSR temperature to encourage oxidation. Additionally, the ceramic may offer a higher coefficient of friction than metal thus limiting slippage. However, greater brittleness of the ceramic compared to metal limits contact forces.

A removable fixture flange is discussed above. This may have one or more of several advantages. First, it allows the PSR to be removed after treatment/coating without expanding the PSR. The expansion might tend to disrupt the oxide coating. Limiting oxide coating disruption may be relevant because shaft groove installation may be less disruptive than removal from a fixed groove fixture. For example, when seals are expanded to seat in a shaft groove, a sloping entry surface on the shaft may limit and homogenize (limit local stress/strain concentrations) the expansion amount relative to the expansion needed to remove a seal from a groove. Additionally, a removable flange may be associated with allowing axial clamping (e.g., as distinguished from a fixed groove).

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

Where a measure is given in English units followed by a parenthetical containing SI or other units, the parenthetical's units are a conversion and should not imply a degree of precision not found in the English units.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. A method for oxide formation on the surface of a ring, the method comprising:
mounting a ring in a fixture (312);
driving rotation of the ring about a first axis (314);
contacting an outer diameter surface of the ring with a roller (340); and
laser heating the outer diameter surface of the ring to form an oxide layer, wherein the rotation causes compaction of the oxide by the roller (340).

2. The method of claim 1 wherein:
the compaction embeds oxide in a substrate of the ring.

3. The method of claim 1 or 2 wherein:
the ring is a split ring.

4. The method of any preceding claim wherein:
the laser heating comprises axial movement of a laser spot (306) on the outer diameter surface of the ring.

5. The method of any preceding claim wherein:
the laser heating comprises alternating scans in opposite directions.

6. The method of any preceding claim wherein:
the laser heating involves multiple illuminations of each point on the outer diameter surface of the ring to progressively build up the oxide.

7. The method of any preceding claim further comprising:
cooling the roller (340).

8. The method of any preceding claim wherein:
the seal has a substrate representing a by-weight majority of the seal and having Co as a largest by-weight constituent element and at least 18.0 weight percent Cr, optionally wherein the seal substrate has no more than 20.0 weight percent any element other than Co, Cr, and Ni; and
the oxide coating comprises Cr₂O₃ and Cr₂CoO₄.

9. The method of claim 8 wherein:
the oxide layer has a thickness (T) of at least 50 nanometers.

10. The method of any preceding claim performed with a system (300) comprising:
said roller (340);
said fixture (312);
a motor (316) coupled to the fixture (312) for said driving;
a laser (302) for generating a laser beam (304) for said laser heating;
a first actuator (308) for axially moving a laser spot (306) from the laser (302) on the outer diameter surface of the ring; and
a second actuator (346) for controlling a contact force between the roller (340) and the outer diameter surface of the ring.

11. The method of claim 10 further comprising:
via the first actuator (308), axially moving the laser spot (306) for said laser heating; and
via the second actuator (346) controlling the contact force between the roller (340) and the outer diameter surface of the ring.

12. The method of claim 11 wherein:
the laser (302) is pulsed and the laser heating comprises alternating scans in opposite directions with partial overlap of pulse spots within the scans and partial overlap of pulse spots from scan-to-scan.

13. A seal laser treated to form oxides by the method of any preceding claim, optionally wherein:
the seal further comprises a substrate representing a by-weight majority of the seal and having Co as a largest by-weight constituent element and at least 18.0 weight percent Cr; and/or
the oxide coating comprises Cr₂O₃ and Cr₂CoO₄.

14. A system (300) for oxide formation on a seal ring, the system comprising:
a fixture (312) for holding the seal ring;
a motor (316) for driving rotation of the fixture (312) about a first axis (314);
a roller (340) positioned or positionable to contact an outer diameter surface of the seal ring; and
a laser (302) positioned or positionable to direct a beam (304) to heat the outer diameter surface of the seal ring.

15. The system of claim 14 further comprising:
an actuator (346) for applying a controllable compressive force between the roller (340) and the seal ring; and
a second actuator (308) for shifting the laser beam (304) axially across the seal ring,
optionally wherein the fixture (312) comprises:
a mandrel section (320) for supporting an inner diameter (ID) surface of the seal; and
first and second flanges (324, 325) for engaging respective first and second axial end faces of the seal,
further optionally wherein the mandrel section (320) and the first and second flanges (324, 325) are ceramic.
